# EUROPEAN PATENT APPLICATION

(11) **EP 2 273 821 A1**
(43) Date of publication of application: **12.01.2011**
(21) Application number: 09290588.4
(22) Date of filing: 24.07.2009
(51) Int. Cl.: H04W 36/30

(54) **Method of managing handover in a cellular wireless system**

(30) Priority: 30.06.2009 EP 09290525
(71) Applicant: Alcatel Lucent, 75008 Paris (FR)
(72) Inventor: Fahldieck, Torsten, 71254 Ditzingen (DE)
(74) Representative: Cockayne, Gillian

(57) **Abstract**

In a method of managing handover in a cellular wireless system, channel condition information is received from a mobile terminal attached to a serving base station. Information is also received regarding the location of the mobile terminal. The received channel condition and location information are stored in a data store. The serving base station accesses data in the data store to determine if the mobile terminal would have improved connectivity if it handed over to a neighbor base station, and, when such a determination is affirmative, it sends a recommendation to the mobile terminal to handover to the other base station. The channel condition and location data store may be located in the base station. The data store content may be generated by a request response mechanism in reply to the base station.

## Description

### FIELD OF THE INVENTION

The present invention relates to a method of managing handover in a cellular wireless system.

### BACKGROUND

In a typical wireless cellular network, an active mobile terminal is attached to a base station, termed the serving base station, which has coverage of a geographical region, termed the serving cell. When the signal quality received by the mobile terminal from the serving base station is insufficient, for example, if the channel conditions deteriorate or the mobile terminal moves to another location, the mobile terminal must find another base station to be used as the new serving base station. This procedure of selecting a new serving base station is termed handover, and the base station selected as the new serving base station is called the handover target base station. In one network, for example, the current serving base station broadcasts a list of neighboring cells that are potential candidates for selection as the handover target cell. This list is referred to as the neighbor cell list.

To find a suitable target base station, the mobile terminal scans base stations included in the neighbor cell list. The neighbor cell list must include enough potential candidates so that even where the position of the mobile terminal is uncertain or the current state of neighboring cells is unknown, it is likely that the mobile terminal will be able to find a target cell with a sufficiently powerful signal or good enough signal-to-interference ratio (SINR) to enable the mobile terminal to successfully handover to a target cell and attach to it. The serving cell allocates time intervals during which the mobile terminal performs the scanning procedure. The time duration during which the mobile terminal performs scanning is divided into interleaving intervals: time periods for normal transmission (called listening intervals); and time periods for scanning (called scanning intcrvals).

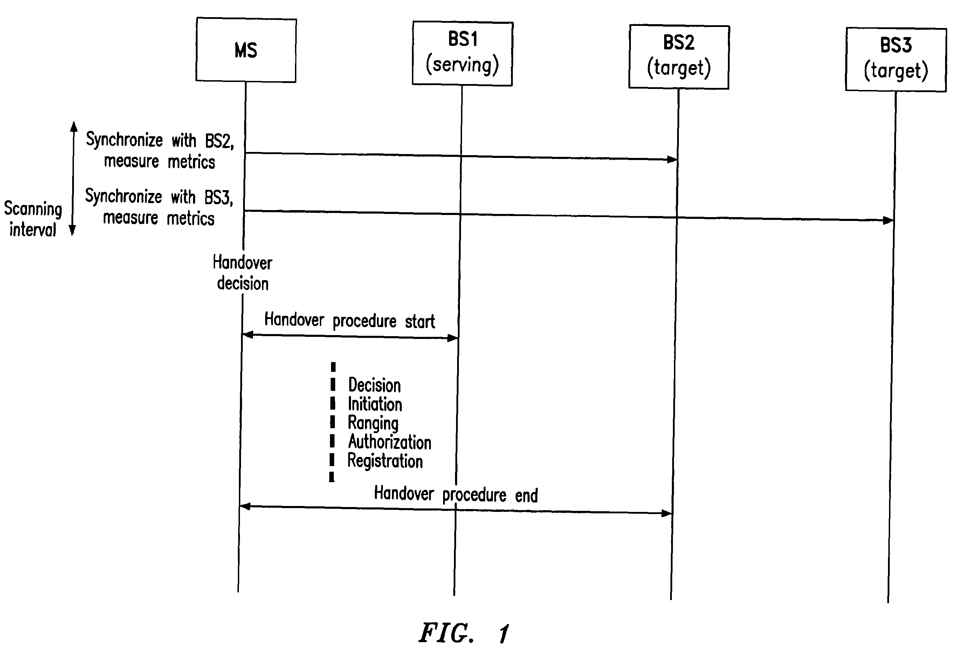

Some types of wireless network currently being developed aim to provide broadband access mobile networks, such as those in accordance with IEEE 802 standards, also sometimes referred to as WiMAX. In one WiMAX network, as schematically shown in Figure 1, a serving base station BS1 serving a mobile terminal MS sends a message at interval, the message including a neighbour cell list. When the mobile terminal MS determines that handover may be required, for example, if the quality of the signal it is receiving from its serving cell drops below a threshold quality level, it sends a message to the serving base station BS 1 indicating that the mobile terminal MS needs to perform scanning. The base station BS 1 sends a message giving time periods allocated to the mobile terminal MS as scanning intervals. The mobile terminal MS then scans the base stations BS2 and BS3 in the neighbour cell list at the times defined as scanning intervals, as shown in Figure 1. During scanning, there is no communication of payload data between the mobile terminal MS and its serving cell BS 1. Thus, throughput of data is reduced compared to periods when no scanning is required. If handover to one of the target base stations BS2 is deemed necessary to improve or maintain connectivity, the handover procedure is initiated. As shown, this involves decision making, initiation, ranging, authorization and registration to obtain successful handover, in this case to target base station BS2.

### BRIEF SUMMERY

According to one aspect of the invention, in a method of managing handover in a cellular wireless system, channel condition information is received from a mobile terminal attached to a serving base station. Information is also received regarding the location of the mobile terminal. The received channel condition and location information are stored in a data store. The serving base station accesses data in the data store to determine if the mobile terminal would have improved connectivity if it handed over to a neighbor base station, and, when such a determination is affirmative, it sends a recommendation to the mobile terminal to handover to the other base station. The channel condition and location data store may be located in the base station. The data store content may be generated by a request response mechanism in reply to the base station. By using a method in accordance with the invention, it reduces or eliminated the need for a mobile terminal to test its alternative connections to other base stations before it can initiate a handover procedure. As scanning may be avoided, the mobile terminal has enhanced access to the base station for payload data and the duration of any handover procedure may be reduced.

According to another aspect of the invention, a base station is arranged to operate in accordance with the method in accordance with the invention. In one embodiment, a base station includes a data store for storing downlink channel measurement and location information from a mobile terminal attached thereto.

### BRIEF DESCRIPTION OF THE DRAWINGS

Some embodiments of the present invention will now be described by way of example only, and with reference to the accompanying drawings, in which:
Figure 1 schematically illustrates a prior art handover scheme;
Figure 2 schematically illustrates overlapping coverage of two neighbor base stations;
Figure 3 schematically illustrates a method in accordance with the invention; and
Figure 4 schematically illustrates other steps of a method in accordance with the invention.

### DETAILED DESCRIPTION

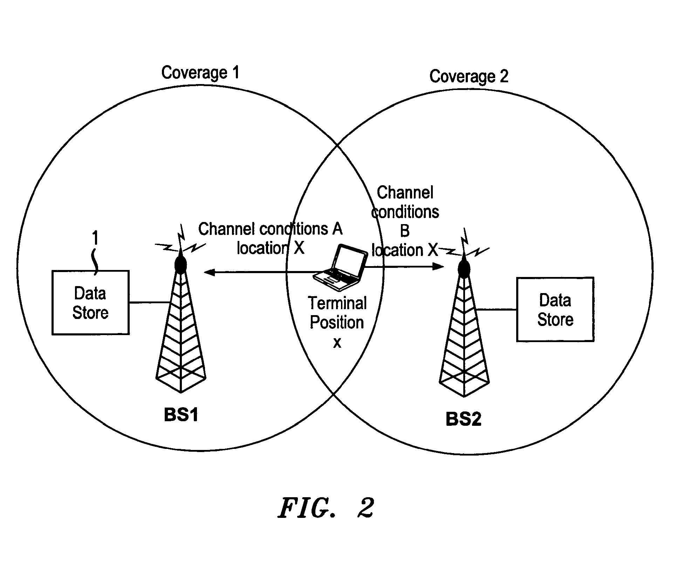

With reference to Figure 2, a mobile terminal MS is attached to serving base station BS1. From time to time, the base station BS 1 sends measurement requests to its connected mobile terminals, typically at regular intervals although some other schedule may be used. For example, the base station may send more frequent requests if it determines that large or rapid changes in channel conditions are occurring. In response to a measurement message from its serving base station BS1, the mobile terminal MS measures its channel conditions and replies to the base station BS 1 with the channel condition measurements A coupled with actual location information x of the mobile terminal MS, as shown in Figure 2. In this embodiment, the location information is provided by a GPS receiver incorporated in the mobile terminal MS, but any alternative method of determining its location may be used, for example by triangulation. In addition, the serving base station BS1 measures its receiver conditions. The channel measurements and location measurement are sent together in this embodiment, but in another method, they could be sent separately.

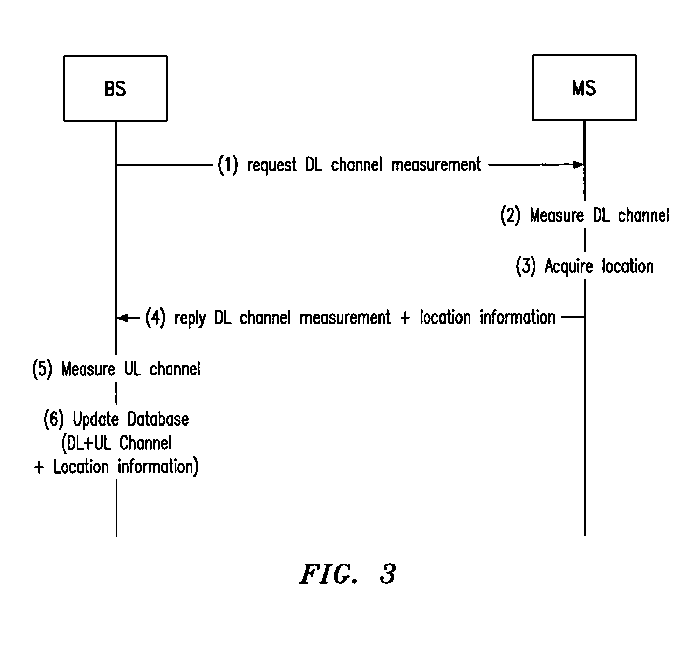

A data store I is associated with the serving base station BS1. Conveniently, the data store 1 is included as part of the base station BS1, but in alternative arrangements it may be located remotely from base station BS1 but still accessible by it The data store 1 generates and updates stored data regarding channel condition measurements at locations as reported by the mobile terminal MS and by other mobile terminals currently, or previously, attached to the serving base station BS1. The steps are illustrated in Figure 3, where at step (1), BS1 sends a message to mobile terminal MS requesting downlink (DL) channel measurement information. At steps (2) and (3), the mobile terminal MS measures the DL channel conditions and acquires its location via a GPS function. At step (4), the mobile terminal MS replies to BS1 with the DL channel measurement information and its location information. At step (5), the BS1 measures the uplink (UL) channel response and then, at step (6), updates the data store 1 with the DL and UL information and the MS location information.

If the base station BS1 receives several channel information reports for the same location over a specific time period, an average value is computed to reduce measurement errors impacted by temporary interferences. Such updates may come from the same MS or from different ones at the same location. Different types of MSs may have different antennas. For example, a small MS such as a cell phone has a small antenna with a low antenna gain. A larger MS such as a laptop may have a larger antenna with a larger antenna gain. Such devices may report different channel conditions at the same position. By having knowledge of this gain index the BS can compute and store antenna-independent channel conditions for the data store. In one embodiment, the mobile terminals report an antenna gain index in addition to the channel condition and the location information.

The base station BS1 starts collection measurements and filling up the data store after initial deployment. The measurement collection is continued during the entire uptime of the base station BS1, so that the data store gradually becomes more complete. In this embodiment, the base station BS1 exchanges its stored data with its neighbour base stations, such as BS2 shown in Figure 2, hence extending its data store. Other base stations similarly maintain their own data stores which include not only the channel conditions in their own respective regions but also the channel conditions of direct neighbour base stations.

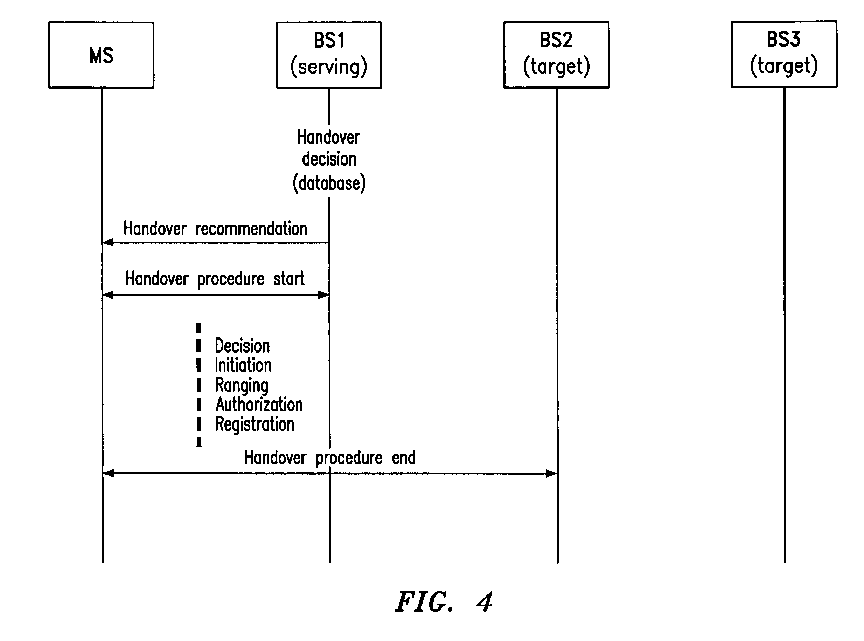

Based on the information in its data store 1, the serving base station BS1 may decide that the mobile terminal MS should perform a handover if the channel conditions between mobile terminal and neighbour base stations at the current position of the mobile terminal are likely to provide improved connectivity. The serving base station BS 1 informs the mobile terminal MS about the possibility of handover to a particular neighbor base station BS2 of the potential target base stations available, as illustrated in Figure 4.

If all, or a significant number, of base stations in an area maintain a data store with a channel condition map in accordance with the present invention, the scanning procedures previously required may be omitted and the total handover procedure may be shortened. If a base station determines that a neighbour base station provides better channel condition to a particular mobile terminal, it can start a network initiated handover procedure. At the beginning of this procedure the base station sends a management message to the particular mobile terminal. This message contains information about the channel conditions at the current position of the terminal, which were measured by the neighbour base stations. Additionally, the base station may send ranging parameters together with the channel condition parameters. After a successful handover and network re-entry the mobile terminal may perform channel condition measurements to improve its connectivity.

In one embodiment, to limit the size of the data store, the data used contains only channel condition measurements of those areas where the coverage of base stations overlap. In one embodiment of the invention, the base station takes the handover decision and controls handover. In another embodiment, the base station uses location information to estimate movements of the mobile station and use the estimates to prepare handover in advance.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of managing handover in a cellular wireless system, comprising:
receiving channel condition information from a mobile terminal attached to a serving base station;
receiving information regarding the location of the mobile terminal;
storing the received channel condition and location information in a data store; and
the serving base station accessing data in the data store to determine if the mobile terminal would have improved connectivity if it handed over to a neighbor base station, and, when such a determination is affirmative, sending a recommendation to the mobile terminal to handover to the other base station.

2. The method as claimed in claim 1 where the data store is included in the base station.

3. The method as claimed in claim 1 or 2 wherein the data store includes channel condition and location information received from at least one other neighbor base station.

4. The method as claimed in claim 3 where information only from base stations having overlapping coverage with the serving base station is included in the data store.

5. The method as claimed in any preceding claim wherein the information in the data store is updated over time.

6. The method as claimed in any preceding claim and wherein the location information is obtained from a GPS application included in the mobile terminal.

7. The method as claimed in any preceding claim and wherein channel condition and location information is received from a plurality of different mobile terminals for inclusion in the data store.

8. The method as claimed in any preceding claim wherein uplink channel measurements are stored in the data store.

9. The method as claimed in any preceding claim and wherein the base station sends a message to the mobile terminal to request it to send the channel condition and location information.

10. The method as claimed in any preceding claim and including obtaining antenna gain information of the mobile terminal and using the antenna gain information in determining the channel condition.

11. A base station arranged to operate in accordance with the method as claimed in any preceding claim.

12. A base station for a cellular wireless network and including a data store for storing downlink channel measurement and location information from a mobile terminal attached thereto and means for requesting the information from the mobile terminal.
